# EUROPÄISCHE PATENTSCHRIFT

(11) **EP 3 081 347 B1**
(45) Veröffentlichungstag und Bekanntmachung des Hinweises auf die Patenterteilung: **06.03.2019**
(21) Anmeldenummer: 16164158.4
(22) Anmeldetag: 07.04.2016
(51) Int. Cl.: B25J 13/02, B25J 19/06, B25J 9/00, B25J 13/06

(54) **ROBOTER-BEDIENHANDGERÄT, EIN DAMIT ELEKTRONISCH KOMMUNIZIERENDES GERÄT UND SYSTEM**
MANUAL ROBOT CONTROL APPARATUS, DEVICE AND SYSTEM USING SAME FOR ELECTRONIC COMMUNICATION
APPAREIL DE COMMANDE MANUEL DE ROBOT, APPAREIL ET SYSTEME EN COMMUNICATION AVEC CET APPAREIL

(30) Priorität: 13.04.2015 DE 102015206575
(43) Veröffentlichungstag der Anmeldung: 19.10.2016
(73) Patentinhaber: KUKA Deutschland GmbH, 86165 Augsburg (DE)
(72) Erfinder: RIEDEL, Martin, 86165 Augsburg (DE)
(74) Vertreter: Ege Lee & Partner Patentanwälte PartGmbB

(56) Entgegenhaltungen:
- WO-A1-2013/029658
- DE-A1-102008 058 218
- DE-A1-102011 118 310

## Beschreibung

Die Erfindung betrifft ein Roboter-Bedienhandgerät, aufweisend ein Gehäuse, das einen handgriffartigen Griffabschnitt aufweist, eine im Gehäuse angeordnete Sicherheits-Grundsteuervorrichtung und wenigstens einen mit dem Gehäuse verbundenen Halter, der zum manuell lösbaren mechanischen Ankoppeln des Gehäuses an ein vom Roboter-Bedienhandgerät verschiedenes, mit der Sicherheits-Grundsteuervorrichtung elektronisch kommunizierendes Gerät ausgebildet ist. Die Erfindung betrifft außerdem zugehörige Geräte und ein System, aufweisend ein solches Roboter-Bedienhandgerät und wenigstens zwei solcher Geräte.

Die DE 10 2010 025 781 A1 beschreibt eine tragbare Sicherheitseingabeeinrichtung mit wenigstens einem Eingabemittel zum Eingeben eines Sicherheitssignals an eine Robotersteuerung, welche eine Schnittstelle aufweist zur Kommunikation mit einem mit der Sicherheitseingabeeinrichtung, insbesondere lösbar, verbundenen Handgerät zum Steuern eines Roboters mittels Kommunikation mit dieser Robotersteuerung.

Die DE 10 2011 118 310 A1 beschreibt ein mobiles Bediengerät für Steuerungen, insbesondere von Spritzgussanlagen, mit einem Bedienteil und einem Visualisierungsteil, wobei das mobile Bediengerät sicherheitsrelevante und sicherheitsirrelevante Bedienfunktionen aufweist, wobei der Bedienteil und der Visualisierungsteil lösbar aneinander befestigt sind, und der Bedienteil und der Visualisierungsteil getrennt voneinander betreibbar sind und die sicherheitstechnisch relevanten Bedienfunktionen über den Visualisierungsteil nur dann ausführbar sind, wenn dieser mit dem Bedienteil verbunden ist.

Die WO 2013/029658 A1 beschreibt ein System eines Industrieroboters, das eine Zustimmeinrichtung und eine Steuerungsvorrichtung umfasst. Die Zustimmeinrichtung und die Steuerungsvorrichtung sind als separate Geräte ausgebildet, die jeweils in eigenen Gehäusen untergebracht sind und die mittels mechanischer Befestigungsmittel miteinander verbunden werden können, um eine Einheit zu bilden.

Aufgabe der Erfindung ist es, ein Roboter-Bedienhandgerät, wenigstens ein damit elektronisch kommunizierendes Gerät, ein entsprechendes System von Roboter-Bedienhandgerät und Geräten zu schaffen, durch welche eine besonders flexible und/oder intuitive Steuerung, insbesondere Programmierung von Robotern ermöglicht ist.

Die Aufgabe der Erfindung wird gelöst durch ein Roboter-Bedienhandgerät, aufweisend ein Gehäuse, das einen handgriffartigen Griffabschnitt aufweist, eine im Gehäuse angeordnete Sicherheits-Grundsteuervorrichtung und wenigstens einen mit dem Gehäuse verbundenen Halter, der zum manuell lösbaren mechanischen Ankoppeln des Gehäuses an ein vom Roboter-Bedienhandgerät verschiedenes, mit der Sicherheits-Grundsteuervorrichtung elektronisch kommunizierendes Gerät ausgebildet ist, wobei der Halter ein Steckverbindungsmittel aufweist, das zum manuellen Anstecken an ein Gegensteckverbindungsmittel des Geräts ausgebildet ist und das Roboter-Bedienhandgerät wenigstens zwei Halter aufweist, die in wenigstens zwei unterschiedlichen Orientierungen weisend am Roboter-Bedienhandgerät, insbesondere am Gehäuse angeordnet sind.

Das Roboter-Bedienhandgerät kann insbesondere ein Roboterprogrammierhandgerät sein. Das Roboter-Bedienhandgerät kann auch ein Manipulator-Bedienhandgerät sein bzw. als ein solches bezeichnet werden. Das mechanisch verbindende Steckverbindungsmittel ist zur manuellen Verbindung des Roboter-Bedienhandgeräts mit dem jeweiligen elektronisch kommunizierenden Gerät ausgebildet. Dabei weist das jeweilige mit dem Roboter-Bedienhandgerät elektronisch kommunizierende Gerät wenigstens ein zum Steckverbindungsmittel des Roboter-Bedienhandgeräts korrespondierend ausgebildetes Gegensteckverbindungsmittel auf. So kann ein Benutzer, beispielsweise ein Roboterprogrammierer das Roboter-Bedienhandgerät manuell, ohne Werkzeuge zu benötigen, von dem elektronisch kommunizierenden Gerät lösen bzw. mit dieser verbinden. Der Halter ist insoweit zum manuell lösbaren, werkzeuglosen mechanischen Ankoppeln des Gehäuses an ein vom Roboter-Bedienhandgerät verschiedenes, mit der Sicherheits-Grundsteuervorrichtung elektronisch kommunizierendes Gerät ausgebildet.

Das Roboter-Bedienhandgerät kann wenigstens ein Nothalt-Auslösemittel, wenigstens eine Zustimmungseinrichtung, wenigstens ein Betriebsartauswahlmittel und/oder ein Anzeigemittel, insbesondere ein Leuchtmittel und/oder ein elektronisches Display aufweisen.

Zumindest das wenigstens eine Nothalt-Auslösemittel, das wenigstens eine Zustimmungseinrichtung und/oder das wenigstens eine Betriebsartauswahlmittel können in sicherer Technik mit einer Robotersteuerung steuerungstechnisch verbunden sein, insbesondere mit dieser kommunizieren.

Die Sicherheits-Grundsteuervorrichtung des Roboter-Bedienhandgeräts ist also nicht nur dann zum Ansteuern eines Roboters ausgebildet und/oder eingerichtet, wenn das Roboter-Bedienhandgerät über das Steckverbindungsmittel mit dem jeweiligen Gerät mechanisch verbunden ist, sondern kann auch dann zum Ansteuern des Roboters ausgebildet und/oder eingerichtet sein, wenn das Roboter-Bedienhandgerät von dem Gerät mechanisch entfernt ist. Es können also auch mechanisch getrennt voneinander Grundsteuerfunktionen des Roboters über Eingabemittel des Roboter-Bedienhandgeräts angesteuert werden. Dies können insbesondere das bereits erwähnte Nothalt-Auslösemittel, die Zustimmungseinrichtung und/oder das Betriebsartauswahlmittel sein. Daneben können weitere ggf. nicht-sichere Eingabemittel und/oder Anzeigemittel an dem Roboter-Bedienhandgerät vorgesehen sein. Dies können beispielsweise ein oder mehrere Displays, Leuchtmittel, Schalter, Tasten, insbesondere zur Menüsteuerung und zur Auslösung eines Touch-ups und/oder Start-/Stopp-Tasten sein.

Bei dem mit der Sicherheits-Grundsteuervorrichtung elektronisch kommunizierenden Gerät kann es sich um die Robotersteuerung, den Roboterarm selbst bzw. ein Robotergestell, eine fahrbare Roboterplattform und/oder ein mobiles Endgerät handeln.

Im Falle eines mobilen Endgeräts als elektronisch mit dem Roboter-Bedienhandgerät kommunizierendes Gerät, kann das mobile Endgerät einen programmgesteuerten elektronischen Rechner, ein Touch-Display und ein auf dem elektronischen Rechner gespeichertes Programm aufweisen, das zur Erstellung von Roboterprogrammen und/oder zum Ansteuern eines Roboters, insbesondere zum Bewegen eines Roboterarms ausgebildet ist und das über das Touch-Display zu bedienen ist.

Das erfindungsgemäße Roboter-Bedienhandgerät kann je nach Ausführungsform eine oder mehrere der folgenden Vorteile bieten.

Das Roboter-Bedienhandgerät kann eine portable und/oder kompakte Einheit bilden, die einfach anzukoppeln, abzukoppeln und zu transportieren, insbesondere manuell zu tragen ist. Durch das Roboter-Bedienhandgerät können die Leistungsfähigkeit, die Displayqualität und/oder die Bedienungsfreundlichkeit neuester Geräte, wie mobile Endgeräte, wie bspw. Tabletcomputer zur Steuerung eines Roboters genutzt werden. Hervorzuheben ist insbesondere die dadurch mögliche kompakte Bauweise des Roboter-Bedienhandgeräts, insbesondere in einem minimalistischen Design. Klar definierte und funktionssichere Kopplungsmöglichkeiten von Sicherheits-Grundsteuervorrichtung mit dem jeweiligen Gerät sind durch speziell ausgestaltete und eindeutig vorgebbare Schnittstellen möglich.

Integrations- und Kopplungsmöglichkeiten für mehrere Tabletmodelle und -baureihen von unterschiedlichen Herstellern können dabei vorgesehen sein. Auch neu erhältliche Modelle können mit wenig Aufwand schnell eingebunden und genutzt werden. Benutzerwünsche und Benutzeranforderungen an Hard- und Software können durch individuelle Wahl des mobilen Endgeräts berücksichtigt werden. Der Nutzer des Roboters profitiert von der ständigen Weiterentwicklung der mobilen Endgeräte, insbesondere bei Tabletcomputern und deren Leistung. Ein neues Gerät kann einfach eingebunden werden, dies ist mit geringem Aufwand und geringen Kosten möglich. Unterschiedliche Benutzer können ihre unterschiedlichen mobilen Endgeräte, insbesondere Tabletcomputer mechanisch und steuerungstechnisch auf einfache Weise wahlweise mit demselben Roboter verbinden. Der Benutzer kann aus einem großen Spektrum an mobilen Endgeräten, wie Tabletcomputer heraussuchen, welche Leistungs- und Preiskategorie für ihn am zielführendsten ist. Es kann auch eine Mischung möglich sein. So können einfache mobile Endgeräte bzw. Tabletcomputer für Wartungs- und Servicemitarbeiter vorgesehen sein und sehr leistungsfähige mobile Endgeräte bzw. Tabletcomputer beispielsweise für Applikationsentwickler oder Tester vorgesehen sein.

Das Roboter-Bedienhandgerät kann insoweit ein Basisbediengerät für den Roboter bilden. Es kann eine Grundfunktionalität am Roboter bieten, vor allem hinsichtlich einer Sicherheitsfunktionalität. Das Roboter-Bedienhandgerät alleine kann kostengünstig und standardisiert aufgebaut sein. Es kann am Roboter verbleiben bzw. in der Nähe des Roboters oder von diesem entfernt werden. Es kann ein Roboter-Bedienhandgerät pro Roboter vorgesehen sein. Es kann eingerichtet sein, lediglich einfache mechanische und elektrische Kopplungsmöglichkeiten aufzuweisen, wobei die Sicherheits-Grundsteuervorrichtung nicht verändert oder erneuert werden muss, sondern es ausreicht beispielsweise das mobile Endgerät auszutauschen oder zu ersetzen, wenn fortschrittliche Neuerungen vorgesehen werden sollen. Das Roboter-Bedienhandgerät kann optisch ansprechend und wie eine vollwertige Einheit, also auch ohne Gerät bzw. mobiles Endgerät zumindest in Grundfunktionen funktionsfähig ausgebildet sein.

Indem der Halter ein Steckverbindungsmittel aufweist, das zum manuellen Anstecken an ein Gegensteckverbindungsmittel des Geräts ausgebildet ist, kann das Roboter-Bedienhandgerät wahlweise autark, d.h. getrennt von sonstigen mit dem Roboter-Bedienhandgerät elektronisch kommunizierenden Geräten genutzt werden, oder es kann in einer insbesondere vorübergehenden mechanischen Verbindung mit dem jeweiligen Gerät mechanisch verbunden sein. So kann das Roboter-Bedienhandgerät wahlweise, insbesondere zeitlich begrenzt, an unterschiedlichste Geräte mechanisch angekoppelt werden.

Außerdem kann das Roboter-Bedienhandgerät zwei oder mehrere Steckverbindungsmittel aufweisen und/oder das jeweilige Gerät zwei oder mehrere Gegensteckverbindungsmittel aufweisen, so dass das Roboter-Bedienhandgerät an verschiedenen Stellen desselben Geräts und/oder in verschiedenen Orientierungen des Roboter-Bedienhandgeräts an dem jeweiligen Gerät mechanisch angekoppelt werden kann. So können unterschiedliche ergonomische Gestaltungen von Roboter-Bedienhandgerät und Gerät erzeugt werden. Beispielsweise kann dasselbe Gerät, wie bspw. ein mobiles Endgerät, wie ein Tabletcomputer durch verschiedene Ansteckorte des Roboter-Bedienhandgeräts von einem Rechtshandbetrieb in einen Linkshandbetrieb verändert werden.

Die Erfindung wird im Folgenden mitunter anders ausgedrückt, weiter erläutert, wobei auch andere Begriffe im Sinne der erfindungsgemäßen Komponenten verwendet werden.

Generell ist durch das erfindungsgemäße Steckverbindungsmittel zumindest eine mechanische Verbindung zwischen dem Roboter-Bedienhandgerät und dem elektronisch kommunizierenden Gerät vorgesehen. Das Roboter-Bedienhandgerät seinerseits ist im Allgemeinen mit einer Robotersteuerung steuerungstechnisch verbunden, derart, dass durch Bedienen der Sicherheits-Grundsteuervorrichtung des Roboter-Bedienhandgeräts die Robotersteuerung angesteuert wird, um beispielsweise den Roboterarm oder eine fahrbare Roboterplattform angesteuert zu bewegen. Eine steuerungstechnische Verbindung zwischen Robotersteuerung, Roboter-Bedienhandgerät und elektronisch kommunizierendem Gerät, insbesondere mobilem Endgerät, wie ein Tabletcomputer kann eine elektrische Verbindung sein. Dabei kann das Roboter-Bedienhandgerät entweder drahtlos oder drahtgebunden sicher mit der Robotersteuerung kommunizieren. Außerdem kann das elektronisch kommunizierende Gerät, insbesondere das mobile Endgerät, wie der Tabletcomputer, direkt drahtlos an die Robotersteuerung angebunden sein oder elektrisch mit dem Roboter-Bedienhandgerät gekoppelt sein und so die bereits bestehende Kommunikation des Roboter-Bedienhandgeräts zur Robotersteuerung mitnutzen. Die Befehle oder Signale, die über das elektronisch kommunizierende Gerät, insbesondere über das mobile Endgerät, wie dem Tabletcomputer an die Robotersteuerung übertragen werden, können in sicherer Technik oder nicht-sicherer Technik übertragen werden. Das Roboter-Bedienhandgerät mit seinen sicherheitsrelevanten Bedienfunktionalitäten, wie Notaus- oder Zustimmschalter muss jedoch sicher mit der Robotersteuerung verbunden sein. Eine drahtlose Schnittstelle des elektronisch kommunizierenden Geräts, insbesondere des mobilen Endgeräts, wie dem Tabletcomputer kann auch am roboterfernen Arbeitsplatz für eine drahtlose Kommunikation beispielsweise mit einer externen Tastatur, Maus und/oder einem externen Monitor genutzt werden.

Die Erfindung kann also je nach Ausführungsform die beiden Welten von sicherer, zuverlässiger Industriesteuerung und fortschrittlicher, benutzerfreundlicher und leistungsstarker Konsumelektronik miteinander verbinden und damit neue Wege in der effizienten und einfachen Roboterbedienung und Robotersteuerung ermöglichen.

Diese Erfindung beschreibt das Grundkonzept sowie exemplarisch Ausführungsformen einer temporären mechanischen Koppelung eines vom Roboter-Bedienhandgerät separaten elektronisch kommunizierenden Geräts, insbesondere eines mobilen Endgeräts mit sicherheitsrelevanten roboter- und/oder anlagenspezifischen Bediengrundelementen, die auf dem Roboter-Bedienhandgerät, d.h. der Sicherheits-Grundsteuervorrichtung des Roboter-Bedienhandgeräts vorhanden sind.

Durch die technische Lösung einer mechanischen und steuerungstechnischen Kopplung, durch Anbindung des Roboter-Bedienhandgeräts an ein separates elektronisch kommunizierendes Gerät, wie beispielsweise ein mobiles Endgerät, wie eines Tabletcomputers an eine Robotersteuerung um einen Roboter zu steuern, können entsprechend unterschiedliche Gerätesysteme geschaffen werden, die sich zu vielerlei Bedienszenarien kombinieren lassen, wie dies u.a. in den Ausführungsbeispielen der Figuren exemplarisch aufgezeigt ist.

Das Steckverbindungsmittel kann ausgebildet sein, in einer Fügeanordnung zum Gegensteckverbindungsmittel durch eine translatorische und/oder rotatorische Bewegung des Roboter-Bedienhandgeräts relativ zum anzukoppelnden Gerät sich in eine Kopplungsanordnung mit dem Gegensteckverbindungsmittel zu bringen, derart, dass das Steckverbindungsmittel in dieser Kopplungsanordnung formschlüssig mit dem Gegensteckverbindungsmittel verbunden ist.

Jeweils ein Steckverbindungsmittel und ein Gegensteckverbindungsmittel bilden dabei zwei korrespondierende Bauteile, die in einem zusammengesteckten Zustand eine mechanische Verbindung schaffen und dabei jedoch so ausgebildet sind, dass diese beiden verbundenen Teile von einem Benutzer manuell und ohne separate Werkzeuge zu benötigen wieder voneinander zerstörungsfrei getrennt werden können und später wiederum erneut miteinander verbunden werden können. Das Steckverbindungsmittel und das Gegensteckverbindungsmittel können nach dem Prinzip Stecker-Buchse ausgebildet sein. Wahlweise kann dabei der Stecker an dem Roboter-Bedienhandgerät und die Buchse an dem elektronisch kommunizierenden Gerät angebracht sein oder es kann der Stecker an dem elektronisch kommunizierenden Gerät und die Buchse an dem Roboter-Bedienhandgerät angebracht sein.

Beispielsweise kann die Paarung von Steckverbindungsmittel und Gegensteckverbindungsmittel in Art eines Bajonettverschlusses, einer Klinkenstecker-/buchse-Verbindung oder einer Feder-/Nut-Verbindung ausgebildet sein.

Das Steckverbindungsmittel kann einen Vorsprung aufweisen, welcher ausgebildet ist, in der Kopplungsanordnung einen Rücksprung des Gegensteckverbindungsmittels zu hintergreifen.

Das Steckverbindungsmittel kann insoweit in Zusammenwirken mit dem Gegensteckverbindungsmittel ein formschlüssiges Verbindungsmittel bilden. Dieses formschlüssige Verbindungsmittel kann mit einem zusätzlichen manuell zu betätigenden Verriegelungsmittel gegen ungewolltes Lösen gesichert sein.

Das Steckverbindungsmittel kann alternativ einen Rücksprung aufweisen welcher ausgebildet ist, in der Kopplungsanordnung von einem Vorsprung des Gegensteckverbindungsmittels hintergriffen zu werden.

Das Steckverbindungsmittel kann auch in dieser Ausführungsvariante in Zusammenwirken mit dem Gegensteckverbindungsmittel ein formschlüssiges Verbindungsmittel bilden. Dieses formschlüssige Verbindungsmittel kann mit einem zusätzlichen manuell zu betätigenden Verriegelungsmittel gegen ungewolltes Lösen gesichert sein.

Das Steckverbindungsmittel kann ausgebildet sein, in einer Fügeanordnung zum Gegensteckverbindungsmittel durch eine translatorische und/oder rotatorische Bewegung des Roboter-Bedienhandgeräts relativ zum anzukoppelnden Gerät sich in eine Kopplungsanordnung mit dem Gegensteckverbindungsmittel zu bringen, derart, dass das Steckverbindungsmittel in dieser Kopplungsanordnung kraftschlüssig mit dem Gegensteckverbindungsmittel verbunden ist.

Das Steckverbindungsmittel kann eine Klemmvorrichtung aufweisen, welche ausgebildet ist, in der Kopplungsanordnung das Steckverbindungsmittel kraftschlüssig gegen das Gegensteckverbindungsmittel zu klemmen.

Das Steckverbindungsmittel kann ausgebildet sein, in einer Fügeanordnung zum Gegensteckverbindungsmittel durch eine translatorische und/oder rotatorische Bewegung des Roboter-Bedienhandgeräts relativ zum anzukoppelnden Gerät sich in eine Kopplungsanordnung mit dem Gegensteckverbindungsmittel zu bringen, derart, dass das Steckverbindungsmittel in dieser Kopplungsanordnung mittels Magnetkraft mit dem Gegensteckverbindungsmittel verbunden ist.

In allen Ausführungsvarianten des Roboter-Bedienhandgeräts können wenigstens zwei Steckverbindungsmittel in wenigstens zwei unterschiedlichen Orientierungen weisend am Roboter-Bedienhandgerät, insbesondere am Gehäuse angeordnet sein.

Indem zwei Halter, insbesondere wenigstens zwei Steckverbindungsmittel vorgesehen sind, die in wenigstens zwei unterschiedlichen Orientierungen weisen, kann das Roboter-Bedienhandgerät in unterschiedlichen Ausrichtungen bezüglich des jeweiligen Geräts an das Gerät angekoppelt werden.

Die Sicherheits-Grundsteuervorrichtung kann in allen Ausführungsvarianten wenigstens ein Nothalt-Auslösemittel, wenigstens eine Zustimmungseinrichtung, wenigstens ein Betriebsartauswahlmittel und/oder wenigstens ein Anzeigemittel, insbesondere wenigstens ein elektronisches Display aufweisen.

Generell kann das Gehäuse des Roboter-Bedienhandgeräts eine Deckenwand, eine Bodenwand und eine die Deckenwand mit der Bodenwand verbindende Mantelwand aufweisen, die den handgriffartigen Griffabschnitt bildet.

Die Mantelwand kann zur Bildung eines hantelförmigen Gehäuses gegenüber einem an die Deckenwand grenzenden Oberabschnitt der Mantelwand und einem an die Bodenwand angrenzenden Unterabschnitt der Mantelwand in einem Mittenabschnitt eingeschnürt ausgebildet sein, wobei das Gehäuse in diesem eingeschnürten Mittenabschnitt der Mantelwand den handgriffartigen Griffabschnitt aufweist.

Das Roboter-Bedienhandgerät kann demgemäß in Art beispielsweise eines Skistockgriffes oder eines Pistolengriffes ausgebildet sein. Das Gehäuse des Roboter-Bedienhandgeräts kann insoweit einen Umfang aufweisen, der höchstens so groß ist, dass das Gehäuse an seiner Mantelwand zumindest annähernd vollständig von der Hand eines Benutzers umfasst werden kann. An der Mantelwand können dazu muldenförmige Einbuchtungen vorgesehen sein, welche zum Anlegen jeweils eines Fingers einer Hand des Benutzers an jeweils eine muldenförmige Einbuchtung der Mantelwand ausgebildet sind. Die muldenförmigen Einbuchtungen können demgemäß in Größe, Form und Ausrichtung hinsichtlich ergonomischer Aspekte an eine Hand eines Menschen angepasst sein. Ein Oberabschnitt der Mantelwand kann in einem manuell gegriffenen Zustand des Roboter-Bedienhandgeräts über die Faust des haltenden Benutzers nach oben hinausstehen. Ein Unterabschnitt der Mantelwand kann in einem manuell gegriffenen Zustand des Roboter-Bedienhandgeräts unter der Faust des haltenden Benutzers nach unten hinausstehen.

Der wenigstens eine Halter, insbesondere das wenigstens eine Steckverbindungsmittel kann an dem Oberabschnitt der Mantelwand und/oder an dem Unterabschnitt der Mantelwand angeordnet sein.

Die erfindungsgemäße Aufgabe wird außerdem gelöst durch ein Gerät, insbesondere einen Roboterarm, ein Steuerungssockel, eine fahrbare Roboterplattform, Zubehörmodul und/oder ein mobiles Endgerät, aufweisend wenigstens ein Gegensteckverbindungsmittel, welches ausgebildet ist, in einer Kopplungsanordnung des Geräts, insbesondere des Roboterarms, des Steuerungssockels, der fahrbaren Roboterplattform, des Zubehörmoduls und/oder des mobilen Endgeräts an ein Roboter-Bedienhandgerät gemäß einer oder mehrerer, der hier offenbarten Ausführungsformen, mit einem Steckverbindungsmittel des Roboter-Bedienhandgeräts gemäß einer oder mehrerer, der hier offenbarten Ausführungsformen, angesteckt zusammenzuwirken, wobei wenigstens zwei Gegensteckverbindungsmittel, die in wenigstens zwei unterschiedlichen Orientierungen weisend am Gerät, insbesondere am Roboterarm, am Steuerungssockel, an der fahrbare Roboterplattform, am Zubehörmodul und/oder an dem mobilen Endgerät angeordnet sind.

Die erfindungsgemäße Aufgabe wird außerdem gelöst durch ein System, aufweisend ein Roboter-Bedienhandgerät gemäß einer oder mehrerer, der hier offenbarten Ausführungsformen, und wenigstens zwei Geräte aus der Gruppe von wenigstens einem Roboterarm, wenigstens einem Steuerungssockel, wenigstens einer fahrbaren Roboterplattform, wenigstens einem Zubehörmodul und wenigstens einen mobilen Endgeräts gemäß einer oder mehrerer, der hier offenbarten Ausführungsformen, wobei wenigstens ein Steckverbindungsmittel des Roboter-Bedienhandgeräts zum wahlweisen Ankoppeln des Roboter-Bedienhandgeräts an das eine Gerät oder das wenigstens eine andere Gerät ausgebildet ist.

Die Gesamtzeit in der der Benutzer den aktiven Roboter bedient, ihn programmiert, manuell verfährt, analysiert oder Einstellungen oder Parameter ändert, ist in den meisten Fällen im Vergleich zur Gesamtbetriebszeit sehr gering. In dieser kurzen Zeit ist ein möglichst hochwertiges, leistungsfähiges und benutzerfreundliches Bediengerät wünschenswert, um ein effizientes, schnelles und fehlerfreies Arbeiten mit minimaler Stillstandszeit des Roboters zu ermöglichen. In der restlichen Zeit, d.h. während des normalen Betriebs des Roboters im Automatikbetrieb, sind nur wenige Grundfunktionen, hauptsächlich Sicherheitsfunktionen und Statusanzeigen, zur Bedienung erforderlich. eine hohe Funktionalität des Bediengeräts wird somit nicht dauerhaft sondern nur sehr gezielt und kurzzeitig benötigt.

Ein Ansatz, um die Funktionalität temporär deutlich zu erhöhen, ist die Trennung zwischen hochwertigen Bedienfunktionen und einfachen Basisfunktionen in zwei räumlich getrennte Einheiten. Die beiden Einheiten können neben unterschiedlichen Bedienfunktionalitäten auch unterschiedlichen Sicherheitsanforderungen genügen.

Eine temporäre Kopplung dieser Einheiten ermöglicht eine Doppelvergabe von Funktionen, wie beispielsweise Sicherheits-Hardware-Tasten, zu vermeiden und damit Kosten und Bauraum zu reduzieren.

Zielführend, sowohl in bedienungstechnischer also auch in wirtschaftlicher Hinsicht ist ein Bedienkonzept, bei dem ein kostengünstiges Basisbediengerät mit Grundfunktionalität und ein leistungsfähiger Tabletcomputer aus dem Konsumentenbereich verwendet wird.

Die hier vorgestellte Erfindung betrifft ein solches Basisbediengerät, d.h. ein Roboter-bedienhandgerät, welches als ein multifunktionaler Bediengriff ausgeführt ist und diversere Koppelmöglichkeiten zu stationären oder mobilen Maschinen, sowie zu Robotern oder unterschiedlichen Bediengeräten aufweist. Er dient als universelles Basisgerät und besitzt je nach Koppelungspartner, d.h. elektronisch kommunizierendem Gerät eine unterschiedliche Funktionalität und unterschiedlichen Funktionsumfang. Die Erfindung bietet wesentliche Vorteile gegenüber bekannten Konzepten und aktuellen auf dem Markt erhältlichen Bedien- und Eingabegeräten, wie beispielsweise, dass ein einziges universelles Basisgerät für unterschiedlichste Anwendungsfelder in der Robotik verwendet werden kann, welches mit unterschiedlichen Partnern koppelbar ist, wodurch sich die Funktionalität abhängig von Koppelpartner anpassbar ist. Als Koppelpartner können beispielsweise aktive Systeme, wie Roboter und mobile Plattformen, und/oder passive Systeme, wie Umgebung und Zellenrahmen, sowie weitere Eingabegeräte, wie Tablet-Computer, Smartphones und/oder Mess- und Analysesysteme, wie Kamera-/ Trackingsysteme oder Kraftmesssensoren verwendet werden. Die spezielle Ausführung des Basisgeräts in Griffform bietet eine ergonomische und intuitive Bedienung bei gleichzeitig kompakten und handlichen Abmessungen. Die ergonomische Griffform sowie die Hardwaretasten zur Sicherheitsfunktionalität und Grundbedienung werden auch im gekoppelten Zustand benötigt, um den Koppelpartner, beispielsweise ein Table-Computer zu halten oder beispielsweise einen Roboter zu führen und dabei stets auf Funktionen wie Zustimmung und Not-Aus zugreifen zu können. Die wichtigsten Statusmeldungen und Systemzustände können auch ohne gekoppelten Tablet-Computer direkt am Bediengriff angezeigt werden.

Das Koppelkonzept ermöglicht eine freie Erweiterbarkeit und Anpassbarkeit von Koppelpartner und möglichen Koppelstellen, die im Wesentlichen losgelöst von geometrischen Ausprägungen der Koppelpartner ist. So wären demnach beliebige Tablet-Computermodelle mit unterschiedlichen Größen, Tastenpositionen und Anschlüssen einfach mit dem erfindungsgemäßen Roboter-Bedienhandgerät zu verbinden.

Um die stark unterschiedlichen Anforderungen an ein Roboterbediengerät während des Lebenszyklus erfüllen zu können, kann entweder für jede Robotereinheit ein sehr hochwertiges Bediengerät verwendet werden oder im Sinne dieser Erfindung ein minimalistischer Basisbediengriff die erforderlichen Grundsicherheitsfunktionen bereitstellen.

Dieser einfache und kostengünstige Basisbediengriff, d.h. ein erfindungsgemäßes Roboter-Bedienhandgerät, kann temporär mit einem weiteren, diesmal sehr hochwertigen separaten Gerät, wie beispielsweise einem Standard Tablet-Computer gekoppelt werden, um eine kurzzeitige hohe Leistungsfähigkeit bei der Bedienung zu ermöglichen. Dabei kann jede robotische Einheit, wie Roboter oder mobile Plattform, ggf. zumindest jede Zelle einen solchen Basisbediengriff besitzen. Die hochwertigen separaten Geräte sind dabei nicht festen Einheiten von Roboter-Bedienhandgeräten zugeordnet und können somit immer bedarfsgerecht dort eingesetzt werden, wo diese benötigt werden. Die Anzahl dieser, beispielsweise Tablet-Computer ist abhängig von der Art und Größe der Gesamtanlage und kann vom Benutzer eigenständig und kurzfristig problemlos vergrößert werden.

Jedes Basisbediengerät ist nach einem Paaring einer robotischen Einheit fest zugeordnet, auf die sich seine Sicherheitsfunktionalität bezieht. Dies wird nicht von einer mechanischen Kopplung des Basisbediengeräts an eine externe Einheit beeinflusst oder verändert. Das Hinzufügen oder Wechseln der Verknüpfung zu einer oder mehreren robotischen Einheiten ist durch bewusstes Neu-Einrichten des Basisbediengeräts möglich.

Die Erfindung stellt somit ein Bedienkonzept vor, welches Ressourcen effizient dort einsetzt, wo sie benötigt werden und trotzdem jederzeit eine sichere Bedienung der Grundfunktionen vor Ort an der Einheit ermöglicht. Dies ermöglicht, dem Benutzer eine sehr leistungsfähige Roboterbedienung anzubieten, die stets dem aktuellen Stand der Technik entspricht, dem Benutzer eine sehr wirtschaftliche Roboterbedienung anzubieten, welche die eingesetzten Ressourcen immer optimal ausnutzt und unter anderem auf Standard-Eingabeeinheiten aufbaut, dem Benutzer eine sehr sichere Roboterbedienung bietet, die alle erforderlichen Richtlinien und Normen erfüllt und dem Benutzer eine sehr intuitive, effiziente und individuelle Roboterbedienung bietet, die über die grafische Benutzeroberfläche des Tablets komplett frei anwendungs- und benutzerspezifisch konfigurierbar ist.

Das Roboter-Bedienhandgeräten kann demgemäß ausgebildet sein, wahlweise eines von mehreren möglichen, unterschiedlichen mobilen Endgeräten, insbesondere mobile Endgeräte unterschiedlicher Modelltypen und/oder Größen mit derselben Sicherheits-Grundsteuervorrichtung verbinden zu können und das ausgewählte mobile Endgerät in einem eingesetzten oder angesetzten Zustand mit der Sicherheits-Grundsteuervorrichtung mechanisch zu verbinden.

Ziel der Erfindung kann es demnach sein, ein industrietaugliches Roboter-Bedienhandgerät zu schaffen, das in Hinblick auf Steuerungsstandard und Sicherheitsvorschriften sowie Umwelteinflüssen und/oder Ergonomie bei der Bedienung auf einem fortschrittlichen Niveau gehalten werden kann. Indem der erfindungsgemäße Halter es ermöglicht, bspw. aktuelle handelsübliche mobile Endgeräte mit einer bestehenden Sicherheits-Grundsteuervorrichtung zu verbinden, können die sehr leistungsfähigen aktuell auf dem Markt erhältlichen mobilen Endgeräte zur Steuerung des industrietauglichen Roboter-Bedienhandgeräts genutzt werden.

Mittels des erfindungsgemäßen Halters können unterschiedlich gestaltete mobile Endgeräte mechanisch mit der insbesondere einheitlichen Sicherheits-Grundsteuervorrichtung besonders einfach und flexibel verbunden werden. Mittels des erfindungsgemäßen Halters kann beispielsweise das mobile Endgerät sogar manuell durch einen Benutzer von der Sicherheits-Grundsteuervorrichtung wahlweise getrennt oder verbunden werden. So können insoweit zwei oder mehrere Geräte, d.h. die einheitliche Sicherheits-Grundsteuervorrichtung und das ausgewählte mobile Endgerät miteinander kombiniert werden, oder jedes Einzelgerät separat verwendet werden. Das Roboter-Bedienhandgerät, insbesondere die Sicherheits-Grundsteuervorrichtung ist dabei insoweit autark in einem sicheren Betrieb betriebsfähig und beispielsweise das abgenommene Gerät auch selbstständig betriebsfähig, wenn auch nicht in sicherer Technik. Folglich können insoweit mehrere unterschiedliche vollwertige Bediengeräte für unterschiedliche Szenarien erzeugt werden.

Abweichend zu bekannten Lösungen wird dem Benutzer mit dem erfindungsgemäßen Roboter-Bedienhandgerät außerdem die Möglichkeit gegeben, einen Roboter jederzeit, mit einem dem Roboter zugeordneten, insbesondere unmittelbar mit diesem mechanisch verbundenen Roboter-Bedienhandgerät in den gängigen und/oder minimalen Grundfunktionen manuell zu steuern oder anzuhalten. Dieses einfache Roboter-Bedienhandgerät kann durch mechanische und steuerungstechnische Kopplung mit einem Roboter, einer fahrbaren Roboterplattform und/oder einem mobilen Endgerät, wie beispielsweise einem Tabletcomputer oder Smartphone zu einem sehr hochwertigen und multifunktionalen Bedienhandgerät erweitert werden, welches selbst für komplexe und aufwendige Programmier-, Analyse- und Servicearbeiten bestens geeignet ist. Im separaten Betrieb des mobile Endgeräts, wie der Tabletcomputer, also losgelöst vom Roboter-Bedienhandgerät, ist dieses mobile Endgerät portabel und kann ortsungebunden, z.B. am Arbeitsplatz, im Büro oder in einem Besprechungsraum einzeln oder beispielsweise mit Anbindung an externe Bildschirme oder externe Eingabegeräte dazu genutzt werden, Arbeitsschritte oder Programme für den Roboter offline vorzubereiten, gesammelte Daten auszuwerten und/oder Statusmeldungen bzw. Zustände eines oder mehrerer Roboter per Fernwartung abzufragen. Des Weiteren kann in diesem Fall das mobile Endgerät als ein nutzergebundenes, persönliches Eingabegerät des Roboter-Bedienhandgeräts verwendet werden. Dies hat Vorteile, das beispielsweise mehrere Personen in unterschiedlichen Rollen an demselben Roboter arbeiten können, wobei die für die jeweilige Person optimale Konfiguration, z.B. bezüglich der Softwareausstattung, der Benutzerdaten, wie Cookies, Accounts, und/oder Zugriffsrechte, auf dem mobilen Endgerät individuell zusammengestellt sein kann bzw. später wieder vorgefunden werden kann.

Mehrere konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine schematische Darstellung eines Roboters aufweisend einen Roboterarm und eine Robotersteuerung, sowie ein erfindungsgemäßes Roboter-Bedienhandgerät,
- Fig. 2: eine perspektivische Darstellung einer speziellen Ausführungsform des Roboter-Bedienhandgeräts in Alleinstellung,
- Fig. 3: eine perspektivische Darstellung des Roboter-Bedienhandgeräts gemäß Fig. 2 von oben,
- Fig. 4: eine perspektivische Darstellung des Roboter-Bedienhandgeräts gemäß Fig. 2 von unten,

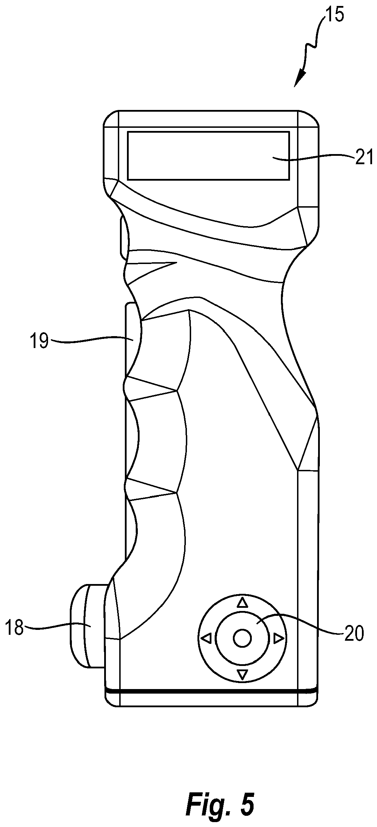

- Fig. 5: eine Seitenansicht des Roboter-Bedienhandgeräts gemäß Fig. 2,
- Fig. 6-8: verschiedene Darstellungen eines Systems von Roboter-Bedienhandgerät und einem Gerät in Gestalt eines mobilen Endgeräts in Art eines Tablet-Computers,
- Fig. 9: eine schematische perspektivische Darstellung eines alternativen Systems, aufweisend das Roboter-Bedienhandgerät und ein Gerät in Gestalt eines auf einem Steuerungssockel montierten Roboterarms, wobei das Roboter-Bedienhandgerät mit dem Steuerungssockel mechanisch gekoppelt ist,
- Fig. 10-11: verschiedene schematische perspektivische Darstellungen eines weiteren Systems, aufweisend das Roboter-Bedienhandgerät und ein Gerät in Gestalt eines Roboterarms, wobei das Roboter-Bedienhandgerät wahlweise mit dem Roboterarm selbst oder seinem Werkzeug bzw. Greifer mechanisch gekoppelt ist,
- Fig. 12-13: verschiedene schematische perspektivische Darstellungen eines weiteren Systems, aufweisend das Roboter-Bedienhandgerät und ein Gerät in Gestalt einer mobilen Fahrplattform mit einem Roboterarm, wobei das Roboter-Bedienhandgerät wahlweise mit der mobilen Fahrplattform mechanisch gekoppelt oder frei in einer Hand haltbar ist,
- Fig. 14: eine schematische perspektivische Darstellung eines Roboter-Bedienhandgeräts an den über ein erfindungsgemäßes Steckverbindungsmittel Geräte in Art von Zubehörmodulen ansteckbar sind, und
- Fig. 15-16: verschiedene schematische, beispielshafte Varianten von Steckverbindungsmittel und Gegensteckverbindungsmittel.

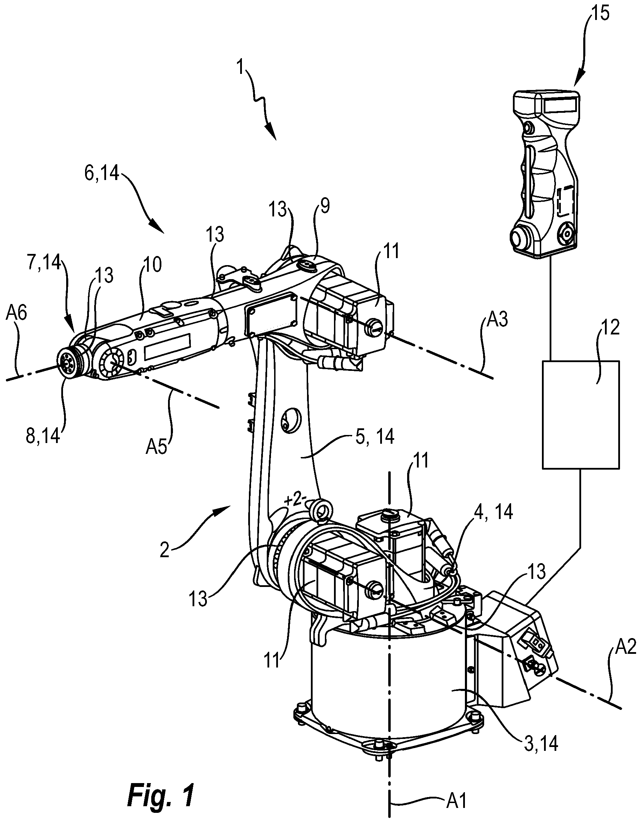

Die Fig. 1 zeigt einen Roboter 1, der einen Roboterarm 2 und eine Robotersteuerung 12 aufweist. Der Roboterarm 2 umfasst im Falle des vorliegenden Ausführungsbeispiels mehrere, nacheinander angeordnete und mittels Gelenke 13 verbundene Glieder 14. Bei den Gliedern 14 handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes Armgehäuse 9 auf. An dem Armgehäuse 9 ist ein Handgrundgehäuse 10 des Armauslegers 6 um die Achse A4 drehbar gelagert.

Der Roboterarm 2 ist mittels dreier elektrischer Antriebsmotoren 11 in seinen drei Grundachsen und mittels dreier weiterer elektrischer Antriebsmotoren 11 in seinen drei Handachsen beweglich.

Die Robotersteuerung 12 des Roboters 1 ist ausgebildet bzw. eingerichtet, ein Roboterprogramm auszuführen, durch welches die Gelenke 14 des Roboterarms 2 gemäß des Roboterprogramms automatisiert oder in einem Handfahrbetrieb automatisch verstellt bzw. drehbewegt werden können. Dazu ist die Robotersteuerung 12 mit den ansteuerbaren elektrischen Antriebsmotoren 11 verbunden, die ausgebildet sind, die Gelenke 14 des Roboterarms 2 zu verstellen. Mit der Robotersteuerung 12 ist ein erfindungsgemäßes Roboter-Bedienhandgerät 15 steuerungstechnisch verbunden.

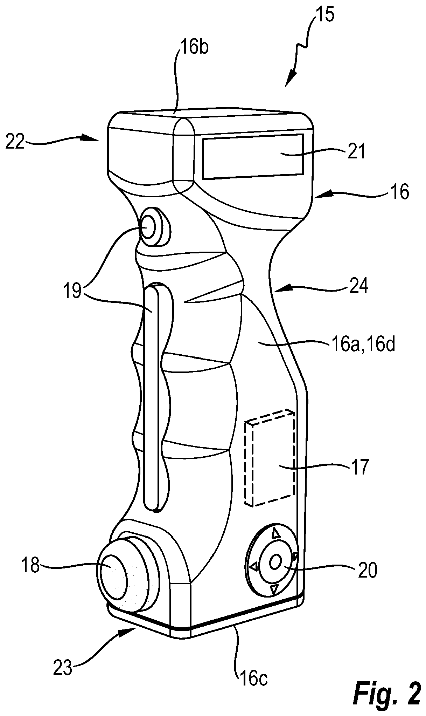

In der Fig. 2 ist das Roboter-Bedienhandgerät 15 gezeigt. Das Roboter-Bedienhandgerät 15 weist ein Gehäuse 16 und eine innerhalb des Gehäuses 16 angeordnete Sicherheits-Grundsteuervorrichtung 17 auf. Das Gehäuse 16 umfasst einen handgriffartigen Griffabschnitt 16a. Die Sicherheits-Grundsteuervorrichtung 17 kann eine elektronische Platine umfassen, die mit Eingabe- und/oder Ausgabemittel elektrisch verbunden ist.

Die Sicherheits-Grundsteuervorrichtung 17 kann als Eingabe- und/oder Ausgabemittel wenigstens ein Nothalt-Auslösemittel 18, wenigstens eine Zustimmungseinrichtung 19, wenigstens ein Betriebsartauswahlmittel 20 und/oder wenigstens ein Anzeigemittel 21, insbesondere wenigstens ein elektronisches Display aufweisen.

Das Gehäuse 16 des Roboter-Bedienhandgeräts 15 umfasst eine Deckenwand 16b, eine Bodenwand 16c und eine die Deckenwand 16b mit der Bodenwand 16c verbindende Mantelwand 16d, die den handgriffartigen Griffabschnitt 16a bildet.

Die Mantelwand 16d ist zur Bildung eines hantelförmigen Gehäuses 16 gegenüber einem an die Deckenwand 16b grenzenden Oberabschnitt 22 der Mantelwand 16d und einem an die Bodenwand 16c angrenzenden Unterabschnitt 23 der Mantelwand 16d in einem Mittenabschnitt 24 eingeschnürt ausgebildet, wobei das Gehäuse 16 in diesem eingeschnürten Mittenabschnitt 24 der Mantelwand 16d den handgriffartigen Griffabschnitt 16a aufweist.

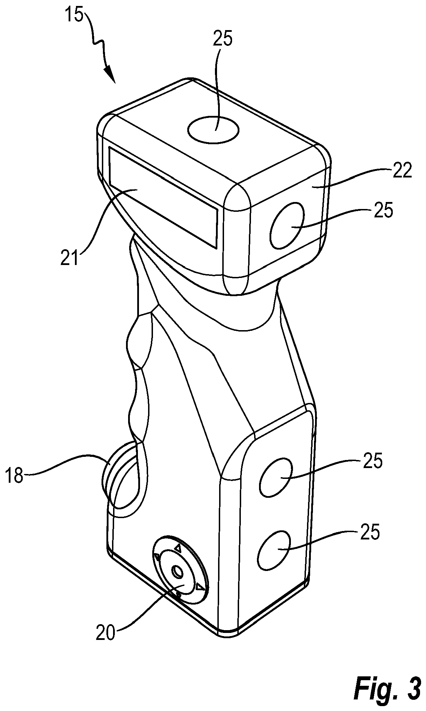

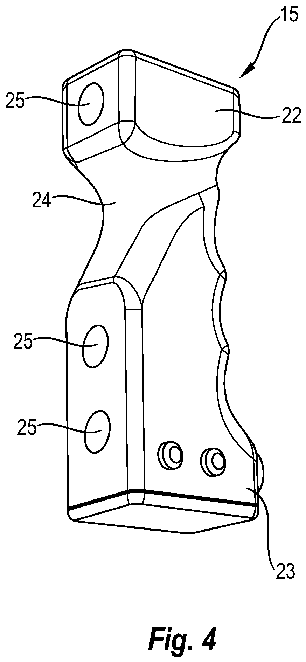

Die Fig. 3 und die Fig. 4 zeigt, dass das Roboter-Bedienhandgerät 15 mehrere Halter 25 aufweisen kann. Wenigstens ein Halter 25 ist an dem Oberabschnitt 22 der Mantelwand 16d angeordnet.

Anders ausgedrückt, kann der multifunktionale Bediengriff, d.h. das Roboter-bedienhandgerät 15 zur intuitiven sicheren Robotersteuerung einen als Haltegriff geformten Grundkörper aufweisen, der als Träger der Hardwaretasten und Anzeigenelemente und ähnlichem dient. Diese Bedienelemente ermöglichen eine Grundbedienfunktionalität, wenn der Bediengriff alleine verwendet wird. Über mechanische Kopplungsschnittstellen, d.h. erfindungsgemäße Halter 25 mit Steckverbindungsmitteln am Grundkörper, können diverse Einheiten mechanisch und ggf. auch elektrisch mit dem multifunktionale Bediengriff verbunden werden.

Beispielsweise als robuster und abgedichteter Kunststoff-Grundkörper kann er eine ergonomische Griffform aufweisen, welche sowohl ein Halten mit der linken als auch rechten Hand gleich gut ermöglicht und ein gutes Erreichen sowie ermüdungsfreies Betätigen aller Hardwaretasten gewährleistet. Als Hardwaretasten können beispielsweise vorgesehen sein: Zustimmschalter, Start-Taster, Not-Aus Schalter, Not-Aus-Quittierungstasten, Wahl- und Bestätigungstaster für ein einfaches Bedienmenü. Dieses Bedienmenü kann auf einem einfachen Display, d.h. dem Anzeigemittel 21 angezeigt werden. Der multifunktionale Bediengriff besitzt wahlweise eine Kabelverbindung oder eine Funkverbindung zur Steuerung, die alle sicheren Standards einer Industriesteuerung, entsprechend der maßgeblichen Richtlinien erfüllt.

Der multifunktionale Bediengriff besitzt an einer oder mehreren Seiten des Grundkörpers Koppelelemente, die eine temporäre und stabile form- oder kraftschlüssige Verbindung zu diversen Koppelpartner ermöglichen. Die Flächen, um die hier nur schematisch ausgeführten Koppelungselemente, sind entsprechend der Gegenflächen des Koppelpartners so ausgeprägt, dass eine günstige Kraftübertragung/ -abstützung gewährleistet ist. Ein Sensor, beispielsweise ein RFID Sensor, erkennt den jeweiligen Koppelpartner und passt die Funktionalität des multifunktionalen Bediengriffs, beispielsweise Tastenbelegungen oder die Parameter in der Steuerung, wie Umschalten in Handverfahrmodus, daraufhin automatisch an. Auf Grund der fehlenden Kabelanbindung ist im Grundkörper eine Batterie oder ein Akku zur Energieversorgung des Bediengriffs vorhanden, der bei Kopplung mit diversen Koppelpartnern, wie Zellenrahmen oder mobile Plattform, kontaktbasiert oder induktiv geladen werden kann.

Ein einfach ausgeführtes Display, d.h. das Anzeigemittel 21 zeigt beispielsweise Statusmeldungen des zugehörigen Robotersystems an, Koppelzustände zu Geräten 26, gibt Hinweise und ermöglicht das Navigieren durch ein Menü. Eine Leuchtanzeige, wie beispielsweise ein LED-Lichtband signalisiert dem Benutzer bereits von weitem den Zustand des Systems. Trägt der Benutzter den Griff, d.h. das Roboter-Bedienhandgerät 15 an die Nähe der Reichweite der sicheren Funkverbindung zur Steuerung 12 fängt sowohl das Lichtband, als auch der ebenfalls beleuchtete Not-Aus Taster an zu blinken und/ oder der Griff an zu vibrieren. Verlässt der Handgriff die Reichweite, erlöschen beide Lampen und die Anlage bleibt stehen. Hierdurch wird dem Benutzer signalisiert, dass die Not-Aus-Funktion sowie alle anderen Funktionen nicht mehr aktiv sind.

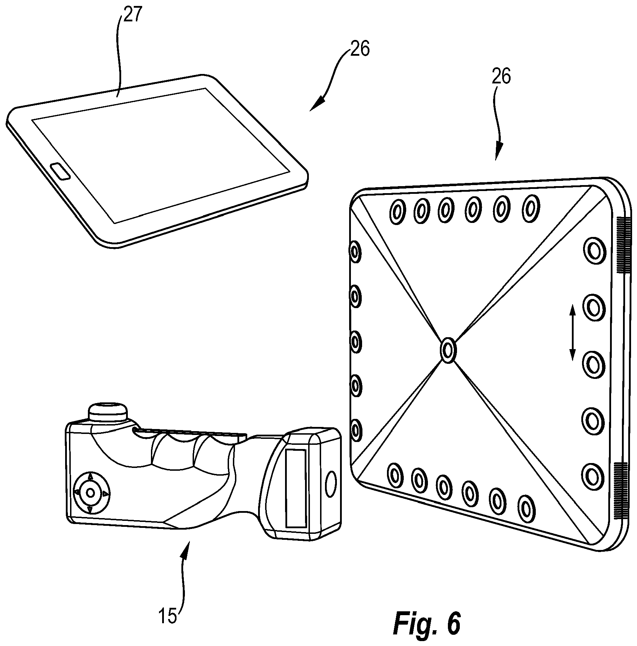

Soll beispielsweise, wie in Fig. 6 bis Fig. 8 aufgezeigt, ein Tablet-Computer 27 als ein beispielhaftes Gerät 26 zur sicheren Robotersteuerung verwendet werden, müssen Sicherheitsfunktionen hardware-technisch vorhanden und für den Benutzer in unmittelbarer Nähe erreichbar sein. Hierzu kann der multifunktionale Bediengriff über Standardschnittstellen mechanisch und ggf. elektrisch an das Tablet gekoppelt werden. Die Funktion des ergonomischen Haltens sowie die der Sicherheits-Hardware-Tasten können jetzt in Kombination mit dem Funktionsumfang des Tablets einfach und effizient genutzt werden.

Die mechanische Kopplung erfolgt über die temporäre Verbindung zweier Koppelelemente, wobei eines, hier als Koppelpunkt bezeichnet, fest und dauerhaft mit der externen Einheit, hier Tablet PC, verbunden ist. Da die Kopplung von Bediengriff zur externen Einheit nur über diese definierte und standardisierte Schnittstelle erfolgt, ist die Kopplungsfähigkeit im Allgemeinen vollständig unabhängig von den geometrischen Eigenschaften der externen Einheit. Dies ermöglicht eine freie Wahl der zu koppelnden Einheit, sodass beispielsweise Tablets unterschiedlicher Größe von unterschiedlichen Herstellern bis hin zu Smartphones problemlos eingebunden werden können. Die Koppelpunkte werden an den Positionen an der externen Einheit angebracht, an denen eine Kopplung später möglich sein soll. Neue Kopplungsstellen und somit neue Griffpositionen sind im Nachhinein durch Befestigen weiterer Koppelpunkte an der externen Einheit einfach zu ergänzen. Wird der Griff über mehrere Koppelpunkte gleichzeitig mit der externen Einheit verbunden, beispielsweise über die Griffrückseite, so müssen die Koppelpunkte an der externen Einheit in einem entsprechenden Raster angebracht worden sein.

In einem Koppelpunkt können zudem Informationen, z.B. Chip, RFID, der externen Einheit gespeichert werden, die bei Kopplung vom Bediengriff gelesen werden. Der Tablet-computer kommuniziert dabei über eine insbesondere nicht sichere Funkverbindung entweder mit der Steuerung 12 direkt oder mit dem Roboter-Bedienhandgerät 15, der die Daten dann weiter an die Steuerung 12 leitet.

Wie bereits beschrieben erfolgt die Kopplung des Griffs an externe Einheiten über eine mechanische Standard-Schnittstelle. Die temporäre Verbindung kann dabei entweder kraft- oder formschlüssig d.h. beispielsweise über eine Verriegelung, eine Schnapphakenkonstruktion, eine Klemmverbindung, einen Hinterschnitt, eine magnetische Verbindung oder auf anderer Weise erfolgen.

Gelöst wird diese Verbindung entweder passiv, d.h. durch reines Abziehen und/oder Abdrehen des Griffs oder durch aktives Entriegeln durch Betätigen eines Tasters, eines Schalters, eines Bedienelements.

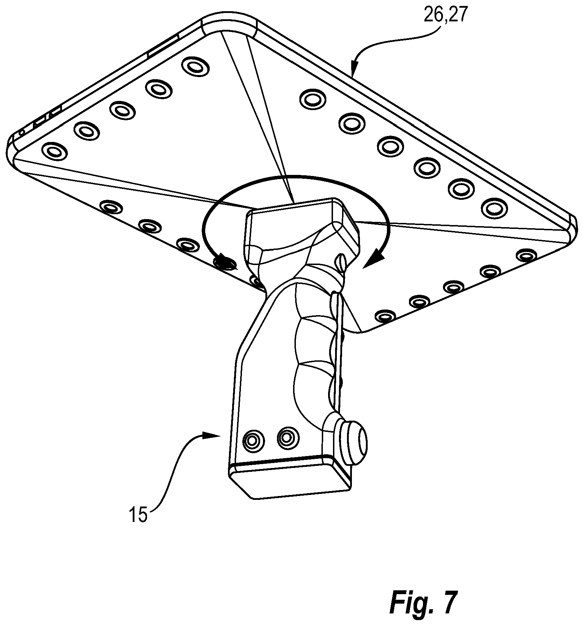

In der Fig. 7 ist die Anwendung des Bediengriffs als Mitteldom des Tablets gezeigt, welches ein ergonomisches Halten mit einer Hand ermöglicht. Der Bediener kann beispielsweise durch leichtes bspw. reibungsbehaftetes Verdrehen der Verbindungsschnittstelle schnell von Hochkant- auf Querformat sowie von Halten mit der linken auf Halten mit der rechten Hand wechseln.

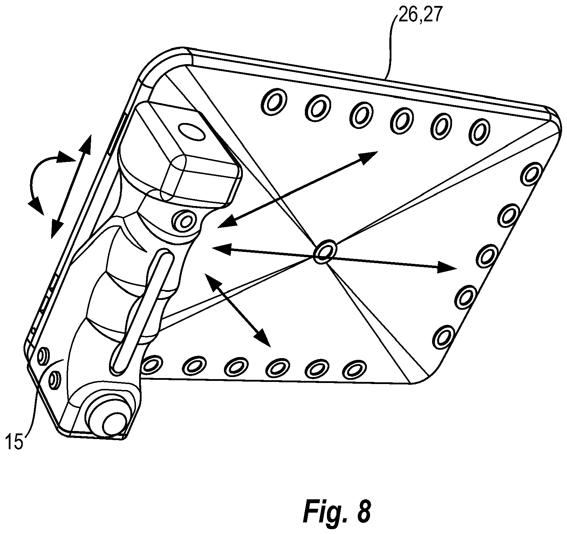

Bei Befestigung der Griffrückseite am seitlichen Tabletrand, wie in Fig. 8 gezeigt, umfasst der Benutzer gleichzeitig beide Einheiten und kann somit das Tablet sicher und ergonomisch halten. Das Haltegefühl ist dabei vergleichbar mit dem Tragen einer größeren Spiegelreflexkamera mit Griffwulst. Unterschiedliche Befestigungspositionen ermöglichen eine freie Wahl der Halteposition und -ausrichtung. Der Benutzer kann in einer solchen Haltung des Tablets, d.h. beide Hände umgreifen das Tablet an dessen seitlichen Rändern, mit einzelnen Fingern seiner Hand die Eingabemittel des Tablets betätigen, selbst wenn der Benutzer das Tablet mit beiden Händen festhält. So ist z.B. mit den Daumen der Hände jedenfalls der Randbereich des Tablets manuell erreichbar, so dass zumindest mittels der Daumen die Eingabemittel, wie bspw. Plus/Minus-Tasten zum Verstellen der Achsgelenke des Roboterarms, betätigt werden können.

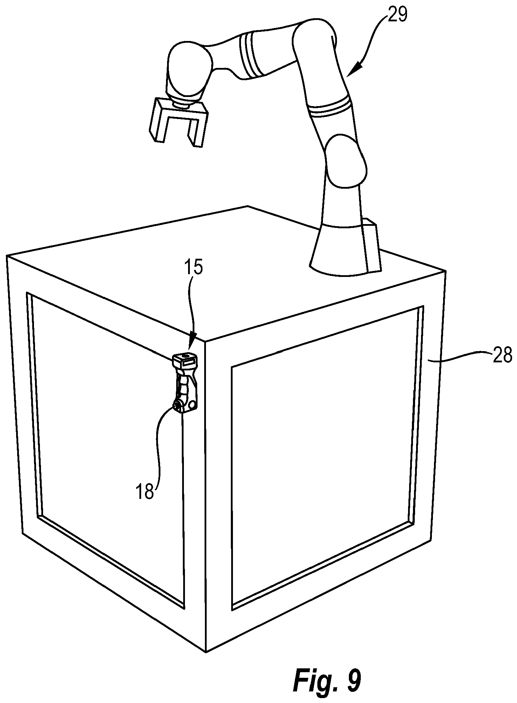

Die mit Abstand längste Einsatzzeit sollte ein Roboter im Allgemeinen im automatischen Betrieb und ohne manuellen Eingriff von außen laufen. Hierbei wird der multifunktionale Bediengriff, d.h. das Roboter-Bedienhandgerät 15, wie in Fig. 9 gezeigt, so an einer Zelle, d.h. beispielsweise an einem Steuerungssockel 28, auf dem ein Roboterarm 29 montiert ist, befestigt, dass er gut sichtbar und der Not-Aus-Taster 18 gut erreichbar ist. Die Befestigung erfolgt auch hierbei wieder über die Verbindung des Griffs mit den Standardkoppelpunkten, die an der Roboterzelle montiert sind.

Bei Kopplung des Griffs mit der stationären Halterung, aber auch in anderen Situationen, kann der multifunktionale Bediengriff kontinuierlich wichtige Statusmeldungen und Informationen des Roboters an ein spezielles oder eine Gruppe von Tablet-Computern oder Kontrollmonitore per Funkverbindung schicken.

Eine Nutzung des multifunktionalen Bediengriffs in Kombination mit einem Tablet-Computer kann so als sicheres erweitertes Bediengerät mit individueller und intuitiver graphischen Touchoberfläche erfolgen.

Eine Einzelnutzung des multifunktionalen Bediengriffs ist auch ohne mechanische Kopplung an ein weiteres Gerät möglich.

In diesem Fall ist nur der Bediengriff ist mit der Steuerung verbunden. Einige Funktionen für diesen Anwendungsfall sind in der Abbildung beispielhaft aufgeführt.

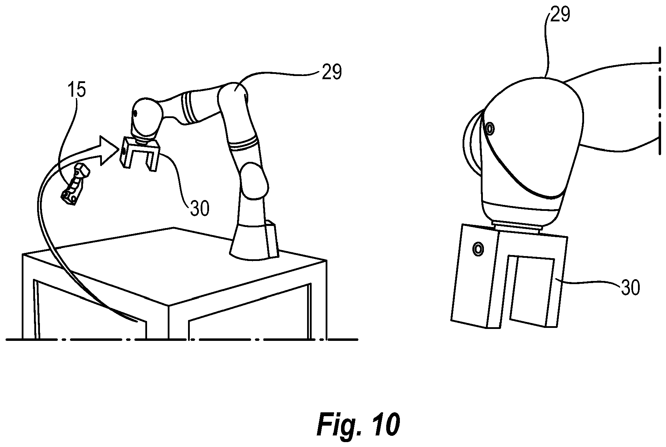

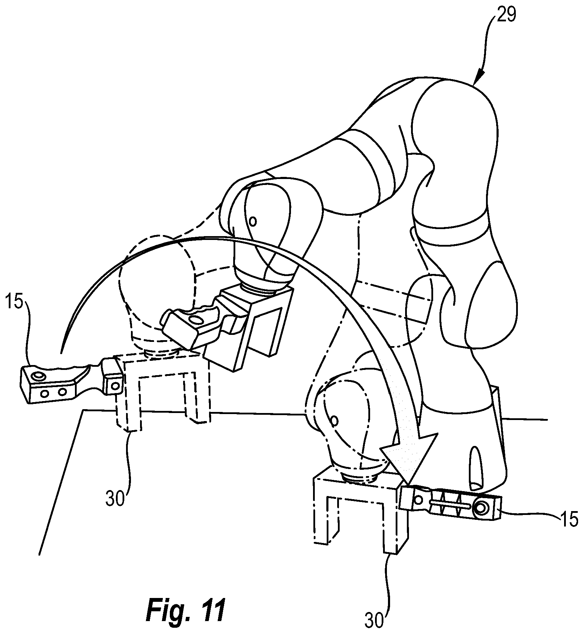

Wie in Fig. 10 schematisch gezeigt, kann der Griff direkt an die Roboterstruktur oder, wie insbesondere in Fig. 11 dargestellt, den Greifer 30 gekoppelt werden. Dabei schaltet die Steuerung wahlweise in den Handführmodus, in dem der Bediener den Roboterarm 29 direkt über den Griff des Roboter-Bedienhandgeräts 15 bei betätigter Zustimmtaste manuell führen kann. Hierzu brauchen wiederum lediglich die Standard-Koppelpunkte auf dem Greifer 30, dem Flansch, einer Vorrichtung bzw. einem Anbau am Flansch oder an einer anderen Stelle des Roboterarms 29 befestigt zu werden.

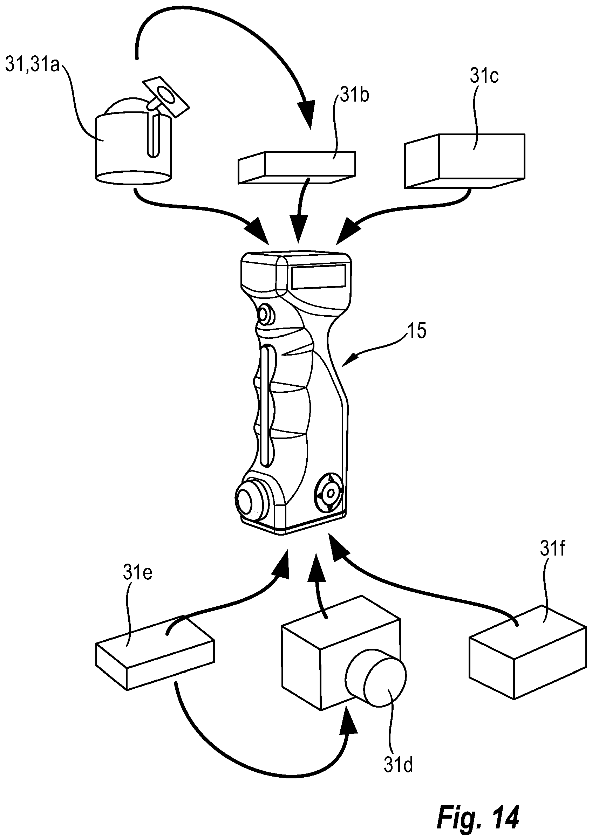

Aus ergonomischen Gründen kann eine angewinkelte Anordnung gewählt werden, wie dies in Fig. 11 veranschaulicht ist. Ein Zubehörmodul 31 z.B. in Art eines fixierbaren Kugelgelenkkopfes 31a (Fig. 14), kann hingegen eine freie Winkeleinstellung ermöglichen. So ist ein einfaches Teachen durch Handführen, Freischalten und Punkt-Abspeichern über einen solchen Roboter-Bedienhandgriff 15 möglich.

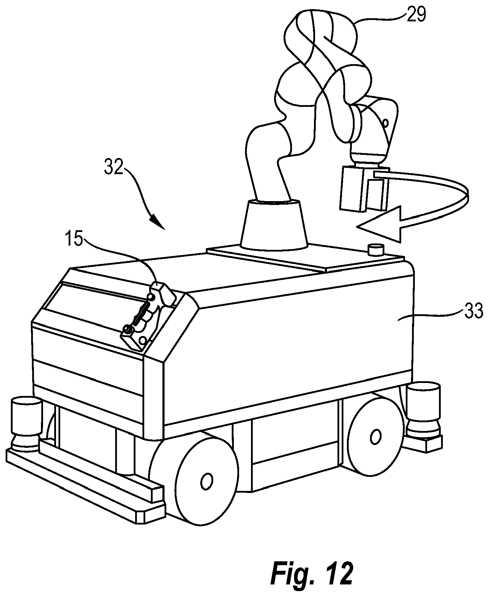

Die Fig. 12 illustriert eine Nutzung des multifunktionalen Bediengriffs, d.h. des Roboter-Bedienhandgriff 15 an einer fahrbaren Roboterplattform 32. Die fahrbare Roboterplattform 32 umfasst ein fahrerloses Transportsystem 33 und einen darauf angeordneten, mitfahrenden Roboterarm 29.

Hier kann der Roboter-Bedienhandgriff 15 direkt an einem Rahmen oder einer Verkleidung der fahrbaren Roboterplattform 32 befestigt werden, indem Koppelpunkte an den entsprechenden Positionen angebracht wurden. Der Bediengriff verbleibt dabei am Fahrzeug und wird mit diesem mitbewegt. Der Benutzer hat hier auch die Möglichkeiten sicherheitsrelevante Grundfunktionen wie z.B. Not-Aus, Not-Aus Quittierung, manuelles Bremsen lösen direkt am Fahrzeug zu nutzen, vergleichbar mit einem fest eingebautem Bedienpanel.

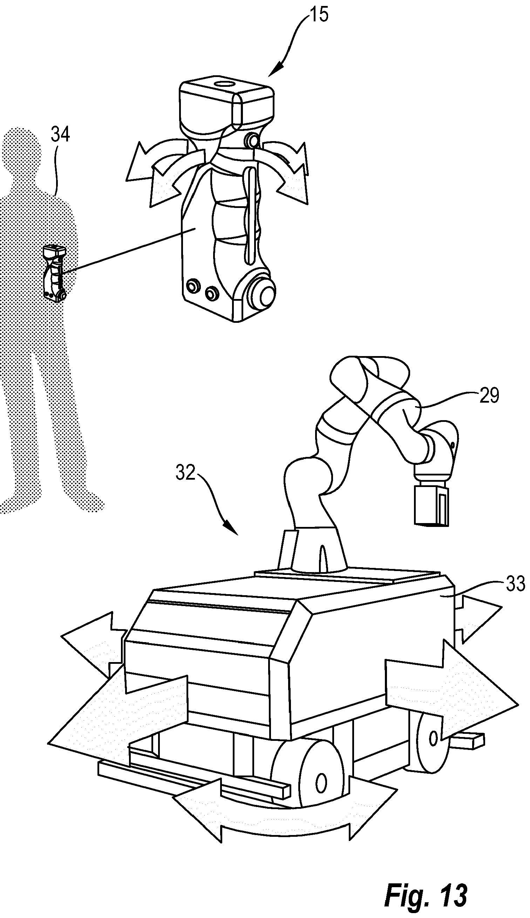

Wie die Fig. 13 illustriert, kann eine Steuerung der fahrbaren Roboterplattform 32 auch über den multifunktionalen Roboter-Bedienhandgriff 15 erfolgen, wenn dieser von der fahrbaren Roboterplattform 32 getrennt ist und bspw. wie dargestellt, von einem Benutzer 34 manuell gehalten wird.

Ist der Bediengriff mit der Steuerung einer fahrbaren Roboterplattform 32 steuerungstechnisch verbunden und wird aus seiner mechanischen Halterung am Fahrzeug entnommen, kann die fahrbare Roboterplattform 32 mittels des Roboter-Bedienhandgriffs 15 manuell verfahren werden. Hierzu können entweder Tasten, mehrdimensionale Joysticks oder wie hier angedeutet Neigungssensoren verwendet werden, die sich am bzw. im Griff befinden. Bei omnidirektionalen Fahrzeugen kann dabei unterschieden werden, ob zwischen Drehung und Querfahrt umgeschaltet werden soll z.B. bei 2D-Neigungssensoren, oder ob die volle Beweglichkeit durch die Stellung des Griffs im Raum erfasst werden kann, bspw. mittels 3D/6D-Sensor. Der Benutzer 34 befindet sich beim manuellen Verfahren stets in Funk- und Sichtweite des Fahrzeugs. Wird der Abstand zu groß bleibt das Fahrzeug nach Vorwarnung stehen. Ebenso stehen dem Benutzer die Grundsicherheitsfunktionen zur Verfügung.

Zur erweiterten Steuerung, beispielsweise für Programmier- und Analysearbeiten kann der Benutzer 34 wiederum den Griff an einen Tablet-Computer koppeln und über diesen auf die Steuerung zugreifen. Die Sicherheitsfunktionen bleiben auch weiterhin erhalten.

Wird der Griff mit einem Roboterarm 29 verbunden, der sich auf dem fahrerlosen Transportsystem 33 befindet, kann dieser entsprechend automatisch und intuitiv handgeführt werden.

Ebenso könnte durch Betätigung von Hardwaretasten am Griff der Roboter starr geschaltet werden und die mobile Plattform durch Handverschieben verfahren werden, in die Sensorik in den Robotergelenken die Intention des Bedieners erkennt, auswertet und in eine Fahrzeugbewegung überträgt.

Als Zubehörmodule 31 sind auch Kraftsensoren 31b am Griff denkbar, die es ermöglichen mit dem Griff direkt am Fahrzeug anzukoppeln und dieses kraftgesteuert manuell zu verschieben

In der Fig. 14 sind demgemäß diverse Zubehörmodule 31 schematisch aufgezeigt, die die Funktionalität des Bediengriffes für einige Anwendungsfälle gezielt vergrößern können. Diese Zubehörmodule 31 könnten beispielsweise stirnseitig oben und unten mit dem Griff mechanisch und ggf. auch elektrisch gekoppelt werden. Ebenso sind Kopplungen untereinander möglich, so dass diese auch miteinander kombinierbar sind. Zusatzfunktionen könnten beispielsweise Zusatzakkus 31c, Sensoren für Kraft und/oder Neigung, Kameras 31d, weitere Tasten 31e oder Eingabemöglichkeiten, wie eine Space-Maus 31f, mechanische Kopplungselemente, wie einstellbare Winkel 31a oder auch kundenspezifische Ausführungen sein. Die Zubehörmodule 31 könnten beispielsweise von zusätzlichen 3D- oder 6D-Kraftsensoren gebildet werden, durch welche eine fahrbare Roboterplattform und/oder einen Roboterarm, insbesondere einen Roboterarm, welcher keine eigenen Kraftsensoren aufweist, handgeführt insbesondere in einer Nachgiebigkeitsregelung handgeführt werden kann.

Koppelelement zwischen Grundkörper und Zubehörmodulen können wiederum die Standardverbinder, d.h. erfindungsgemäße Steckverbindungsmittel 35 und Gegensteckverbindungsmittel 36 sein.

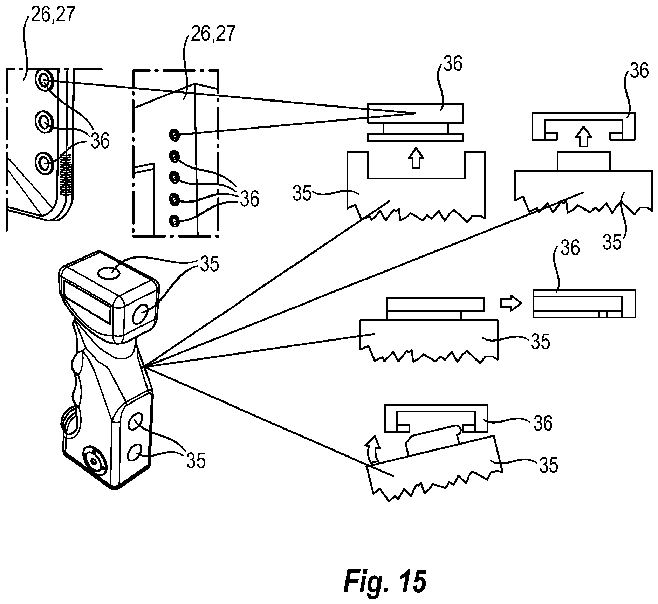

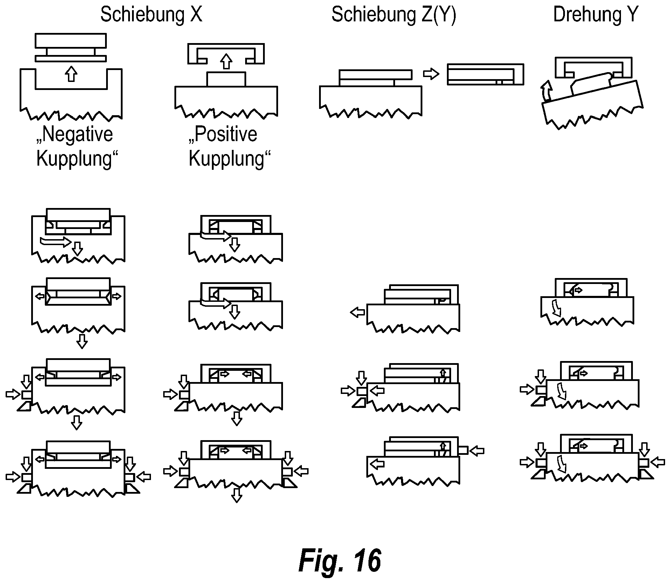

In der Fig. 15 und Fig. 16 werden verschiedene Fügerichtungen für die Kopplung des Roboter-Bedienhandgeräts 15 an ein separates Gerät 26, am Beispiel des Tablet-Computers 27 gezeigt. Dabei bieten sich vor allem die Schiebung in X, aber auch die Schiebung in Z sowie die Drehung um Y an.

Der Halter 25 des Roboter-Bedienhandgeräts 15 weist demgemäß ein Steckverbindungsmittel 35 auf, das zum manuellen Anstecken an ein Gegensteckverbindungsmittel 36 des Geräts 26 ausgebildet ist.

Das Steckverbindungsmittel 35 ist ausgebildet, in einer Fügeanordnung zum Gegensteckverbindungsmittel 36 durch eine translatorische und/oder rotatorische Bewegung des Roboter-Bedienhandgeräts 15 relativ zum anzukoppelnden Gerät 26 sich in eine Kopplungsanordnung mit dem Gegensteckverbindungsmittel 36 zu bringen, derart, dass das Steckverbindungsmittel 35 in dieser Kopplungsanordnung formschlüssig mit dem Gegensteckverbindungsmittel 36 verbunden ist.

Das Steckverbindungsmittel 35 kann einen Vorsprung aufweisen, welcher ausgebildet ist, in der Kopplungsanordnung einen Rücksprung des Gegensteckverbindungsmittels 36 zu hintergreifen.

Alternativ kann das Steckverbindungsmittel 35 einen Rücksprung aufweisen, welcher ausgebildet ist, in der Kopplungsanordnung von einem Vorsprung des Gegensteckverbindungsmittels 36 hintergriffen zu werden.

Wahlweise kann das Steckverbindungsmittel 35 ausgebildet sein, in einer Fügeanordnung zum Gegensteckverbindungsmittel 36 durch eine translatorische und/oder rotatorische Bewegung des Roboter-Bedienhandgeräts 15 relativ zum anzukoppelnden Gerät 26 sich in eine Kopplungsanordnung mit dem Gegensteckverbindungsmittel 36 zu bringen, derart, dass das Steckverbindungsmittel 35 in dieser Kopplungsanordnung kraftschlüssig und/oder formschlüssig mit dem Gegensteckverbindungsmittel 36 verbunden ist.

Wahlweise kann aber auch das Gegensteckverbindungsmittel 36 ausgebildet sein, in einer Fügeanordnung zum Steckverbindungsmittel 35 durch eine translatorische und/oder rotatorische Bewegung des Roboter-Bedienhandgeräts 15 relativ zum anzukoppelnden Gerät 26 sich in eine Kopplungsanordnung mit dem Steckverbindungsmittel 35 zu bringen, derart, dass das Gegensteckverbindungsmittel 36 in dieser Kopplungsanordnung kraftschlüssig und/oder formschlüssig mit dem Steckverbindungsmittel 35 verbunden ist.

Auch kann das Steckverbindungsmittel 35 und/oder das Gegensteckverbindungsmittel 36 eine Klemmvorrichtung oder einen Magneten aufweisen, welche ausgebildet sind, in der Kopplungsanordnung sich klemmend oder mittels Magnetkraft zu verbinden.

## Patentansprüche

1. Roboter-Bedienhandgerät, aufweisend ein Gehäuse (16), das einen handgriffartigen Griffabschnitt (16a) aufweist, eine im Gehäuse (16) angeordnete Sicherheits-Grundsteuervorrichtung (17) und wenigstens einen mit dem Gehäuse (16) verbundenen Halter (25), der zum manuell lösbaren mechanischen Ankoppeln des Gehäuses (16) an ein vom Roboter-Bedienhandgerät (15) verschiedenes, mit der Sicherheits-Grundsteuervorrichtung (17) elektronisch kommunizierendes Gerät (26) ausgebildet ist, wobei der Halter (25) ein Steckverbindungsmittel (35) aufweist, das zum manuellen Anstecken an ein Gegensteckverbindungsmittel (36) des Geräts (26) ausgebildet ist, **dadurch gekennzeichnet, dass** das Roboter-Bedienhandgerät (15) wenigstens zwei Halter (25) aufweist, die in wenigstens zwei unterschiedlichen Orientierungen weisend am Roboter-Bedienhandgerät (15), insbesondere am Gehäuse (16) angeordnet sind.

2. Roboter-Bedienhandgerät nach Anspruch 1, bei dem das Steckverbindungsmittel (35) ausgebildet ist, in einer Fügeanordnung zum Gegensteckverbindungsmittel (36) durch eine translatorische und/oder rotatorische Bewegung des Roboter-Bedienhandgeräts (15) relativ zum anzukoppelnden Gerät (26) sich in eine Kopplungsanordnung mit dem Gegensteckverbindungsmittel (36) zu bringen, derart, dass das Steckverbindungsmittel (35) in dieser Kopplungsanordnung formschlüssig mit dem Gegensteckverbindungsmittel (36) verbunden ist.

3. Roboter-Bedienhandgerät nach Anspruch 2, bei dem das Steckverbindungsmittel (35) einen Vorsprung aufweist, welcher ausgebildet ist, in der Kopplungsanordnung einen Rücksprung des Gegensteckverbindungsmittels (36) zu hintergreifen.

4. Roboter-Bedienhandgerät nach Anspruch 2, bei dem das Steckverbindungsmittel (35) einen Rücksprung aufweist, welcher ausgebildet ist, in der Kopplungsanordnung von einem Vorsprung des Gegensteckverbindungsmittels (36) hintergriffen zu werden.

5. Roboter-Bedienhandgerät nach Anspruch 1, bei dem das Steckverbindungsmittel (35) ausgebildet ist, in einer Fügeanordnung zum Gegensteckverbindungsmittel (36) durch eine translatorische und/oder rotatorische Bewegung des Roboter-Bedienhandgeräts (15) relativ zum anzukoppelnden Gerät (26) sich in eine Kopplungsanordnung mit dem Gegensteckverbindungsmittel (36) zu bringen, derart, dass das Steckverbindungsmittel (35) in dieser Kopplungsanordnung kraftschlüssig mit dem Gegensteckverbindungsmittel (36) verbunden ist.

6. Roboter-Bedienhandgerät nach Anspruch 5, bei dem das Steckverbindungsmittel (35) eine Klemmvorrichtung aufweist, welche ausgebildet ist, in der Kopplungsanordnung das Steckverbindungsmittel (35) kraftschlüssig gegen das Gegensteckverbindungsmittel (36) zu klemmen.

7. Roboter-Bedienhandgerät nach Anspruch 1, bei dem das Steckverbindungsmittel (35) ausgebildet ist, in einer Fügeanordnung zum Gegensteckverbindungsmittel (36) durch eine translatorische und/oder rotatorische Bewegung des Roboter-Bedienhandgeräts (15) relativ zum anzukoppelnden Gerät (26) sich in eine Kopplungsanordnung mit dem Gegensteckverbindungsmittel (36) zu bringen, derart, dass das Steckverbindungsmittel (35) in dieser Kopplungsanordnung mittels Magnetkraft mit dem Gegensteckverbindungsmittel (36) verbunden ist.

8. Roboter-Bedienhandgerät nach einem der Ansprüche 1 bis 7, bei dem die wenigstens zwei Halter (25) wenigstens zwei Steckverbindungsmittel (35) aufweisen, die in wenigstens zwei unterschiedlichen Orientierungen weisend am Roboter-Bedienhandgerät (15), insbesondere am Gehäuse (16) angeordnet sind.

9. Roboter-Bedienhandgerät nach einem der Ansprüche 1 bis 8, bei dem die Sicherheits-Grundsteuervorrichtung (17) wenigstens ein Nothalt-Auslösemittel (18), wenigstens eine Zustimmungseinrichtung (19), wenigstens ein Betriebsartauswahlmittel (20) und/oder wenigstens ein Anzeigemittel (21), insbesondere wenigstens ein elektronisches Display aufweist.

10. Roboter-Bedienhandgerät nach einem der Ansprüche 1 bis 9, bei dem das Gehäuse (16) eine Deckenwand (16b), eine Bodenwand (16c) und eine die Deckenwand (16b) mit der Bodenwand (16c) verbindende Mantelwand (16d) aufweist, die den handgriffartigen Griffabschnitt (16a) bildet.

11. Roboter-Bedienhandgerät nach Anspruch 10, bei dem die Mantelwand (16d) zur Bildung eines hantelförmigen Gehäuses (16) gegenüber einem an die Deckenwand (16b) grenzenden Oberabschnitt (22) der Mantelwand (16d) und einem an die Bodenwand (16c) angrenzenden Unterabschnitt (23) der Mantelwand (16d) in einem Mittenabschnitt (24) eingeschnürt ausgebildet ist, wobei das Gehäuse (16) in diesem eingeschnürten Mittenabschnitt (24) der Mantelwand (16d) den handgriffartigen Griffabschnitt (16a) aufweist.

12. Roboter-Bedienhandgerät nach Anspruch 11, bei dem der wenigstens eine Halter (25), insbesondere das wenigstens eine Steckverbindungsmittel (35) an dem Oberabschnitt (22) der Mantelwand (16d) und/oder an dem Unterabschnitt (23) der Mantelwand (16d) angeordnet ist.

13. Gerät, insbesondere Roboterarm (29), Steuerungssockel (28), fahrbare Roboterplattform (32), Zubehörmodul (31) und/oder mobiles Endgerät (27a), aufweisend wenigstens ein Gegensteckverbindungsmittel (36), welches ausgebildet ist, in einer Kopplungsanordnung des Geräts (26), insbesondere des Roboterarms (29), des Steuerungssockels (28), der fahrbaren Roboterplattform (32), des Zubehörmoduls (31) und/oder des mobilen Endgeräts (27a) an ein Roboter-Bedienhandgerät (15) nach einem der Ansprüche 1 bis 12, mit einem Steckverbindungsmittel (35) des Roboter-Bedienhandgeräts (15) nach einem der Ansprüche 1 bis 12 angesteckt zusammenzuwirken, gekennzeichnet durch_wenigstens zwei Gegensteckverbindungsmittel (36), die in wenigstens zwei unterschiedlichen Orientierungen weisend am Gerät (26), insbesondere Roboterarm (29), Steuerungssockel (28), fahrbare Roboterplattform (32), Zubehörmodul (31) und/oder mobiles Endgerät (27a) angeordnet sind.

14. System, aufweisend ein Roboter-Bedienhandgerät (15) nach einem der Ansprüche 1 bis 12 und wenigstens zwei Geräte (26) aus der Gruppe von wenigstens einem Roboterarm (29), wenigstens einem Steuerungssockel (28), wenigstens einer fahrbaren Roboterplattform (32), wenigstens einem Zubehörmodul (31) und wenigstens einen mobilen Endgeräts (27a) nach Anspruch 13, wobei wenigstens ein Steckverbindungsmittel (35) des Roboter-Bedienhandgeräts (15) zum wahlweisen Ankoppeln des Roboter-Bedienhandgeräts (15) an das eine Gerät (26) oder das wenigstens eine andere Gerät (26) ausgebildet ist.

## Claims

1. Manual robot control apparatus comprising a housing (16), which has a handgrip-like gripping section (16a), a safety basic control device (17) arranged in the housing (16) and at least one holder (25) connected to the housing (16), which holder is designed for coupling the housing (16) in a manually detachable mechanical manner to a device (26) which is different from the manual robot control apparatus (15) and communicates electronically with the safety basic control device (17), wherein the holder (25) has a plug connector (35) which is designed for manually plugging into a counter plug connector (36) of the device (26), **characterised in that** the manual robot control apparatus (15) has at least two holders (25) which are arranged pointing in at least two different orientations on the manual robot control apparatus (15), specifically on the housing (16).

2. Manual robot control apparatus according to claim 1, wherein the plug connector (35) is designed in a joined connection with the counter plug connector (36) by means of a translatory and/or rotational movement of the manual robot control apparatus (15) relative to the device (26) to be coupled to be moved into a coupling arrangement with the counter plug connector (36) such that the plug connector (35) in said coupling arrangement is connected in a form-fitting manner to the counter plug connector (36).

3. Manual robot control apparatus according to claim 2, wherein the plug connector (35) has a projection, which is designed in the coupling arrangement to engage behind a recess of the counter plug connector (36).

4. Manual robot control apparatus according to claim 2, wherein the plug connector (35) has a recess, which is designed in the coupling arrangement to be engaged behind by a projection of the counter plug connector (36).

5. Manual robot control apparatus according to claim 1, wherein the plug connector (35) is designed, in a joined connection with the counter plug connector (36) by means of a translatory and/or rotational movement of the manual robot control apparatus (15) relative to the device (26) to be coupled to be moved into a coupling arrangement with the counter plug connector (36), such that the plug connector (35) is connected in said coupling arrangement in a force-fitting manner to the counter plug connector (36).

6. Manual robot control apparatus according to claim 5, wherein the plug connector (35) has a clamping device which is designed in the coupling arrangement to clamp the plug connector (35) in a force-fitting manner against the counter plug connector (36).

7. Manual robot control apparatus according to claim 1, wherein the plug connector (35) is designed in a joined connection with the counter plug connector (36) by means of a translatory and/or rotational movement of the manual robot control apparatus (15) relative to the device (26) to be coupled to be moved into a coupling arrangement with the counter plug connector (36), such that the plug connector (35) is connected in said coupling arrangement by magnetic force to the counter plug connector (36).

8. Manual robot control apparatus according to any of claims 1 to 7, wherein the at least two holders (25) have at least two plug connectors (35) which are arranged pointing in at least two different orientations on the manual robot control apparatus (15), in particular on the housing (16).

9. Manual robot control apparatus according to any of claims 1 to 8, wherein the safety basic control device (17) comprises at least one emergency stop triggering means (18), at least one enabling device (19), at least one operating mode selection means (20) and/or at least one display means (21), in particular at least one electronic display.

10. Manual robot control apparatus according to any of claims 1 to 9, wherein the housing (16) has a cover wall (16b), a base wall (16c) and a casing wall (16d) connecting the cover wall (16b) to the base wall (16c), which forms the handgrip-like grip section (16a).

11. Manual robot control apparatus according to claim 10, wherein the casing wall (16d) is designed to be constricted in a central section (24) to form a dumbbell-like housing (16) relative to an upper section (22) of the casing wall (16d) delimiting the cover wall (16b) and a lower section (23) of the casing wall (16d) adjoining the base wall (16c), wherein the housing (16) in said constricted central section (24) of the casing wall (16d) comprises the handgrip-like grip section (16a).

12. Manual robot control apparatus according to claim 11, wherein the at least one holder (25), in particular the at least one plug connector (35), is arranged on the upper section (22) of the casing wall (16d) and/or on the lower section (23) of the casing wall (16d).

13. Device, in particular robot arm (29), control base (28), movable robot platform (32), accessory module (31) and/or mobile end device (27a), comprising at least one counter plug connector (36), which is designed in a coupling arrangement of the device (26), in particular the robot arm (29), the control base (28), the movable robot platform (32), the accessory module (31) and/or the mobile end device (27a), to cooperate plugged onto a manual robot control apparatus (15) according to any of claims 1 to 12, with a plug connector (35) of the manual robot control apparatus (15) according to any of claims 1 to 12, **characterised by** at least two counter plug connectors (36), which are arranged pointing in at least two different orientations on the device (26), in particular robot arm (29), control base (28), movable robot platform (32), accessory module (31) and/or mobile end device (27a).

14. System, comprising a manual robot control apparatus (15) according to any of claims 1 to 12 and at least two devices (26) from the group including at least one robot arm (29), at least one control base (28), at least one movable robot platform (32), at least one accessory module (31) and at least one mobile end device (27a) according to claim 13, wherein at least one plug connector (35) of the manual robot control apparatus (15) is designed for the optional coupling of the manual robot control apparatus (15) with the one device (26) or the at least another device (26).

## Revendications

1. Appareil de commande manuel de robot, présentant un boîtier (16) qui présente un tronçon de préhension (16a) en forme de poignée, un dispositif de commande de base de sécurité (17) agencé dans le boîtier (16) et au moins un élément de retenue (25) relié au boîtier (16), qui est réalisé pour l'accouplement mécanique manuellement amovible du boîtier (16) sur un appareil (26) différent de l'appareil de commande manuel de robot (15) et communiquant électroniquement avec le dispositif de commande de base de sécurité (17), l'élément de retenue (25) présentant un moyen de connexion enfichable (35) qui est réalisé pour être branché sur un moyen de connexion enfichable antagoniste (36) de l'appareil (26), **caractérisé en ce que** l'appareil de commande manuel de robot (15) présente au moins deux éléments de retenue (25) qui sont agencés sur l'appareil de commande manuel de robot (15), en particulier sur le boîtier (16), en étant dirigés dans au moins deux orientations différentes.

2. Appareil de commande manuel de robot selon la revendication 1, dans lequel le moyen de connexion enfichable (35), dans un agencement d'assemblage par rapport au moyen de connexion enfichable antagoniste (36), est réalisé pour s'amener dans un agencement de couplage avec le moyen de connexion enfichable antagoniste (36) par un mouvement translatoire et/ou rotatif de l'appareil de commande manuel de robot (15) par rapport à l'appareil (26) à accoupler, de telle sorte que dans cet agencement de couplage, le moyen de connexion enfichable (35). est relié par coopération de formes avec le moyen de connexion antagoniste enfichable (36).

3. Appareil de commande manuel de robot selon la revendication 2, dans lequel le moyen de connexion enfichable (35) présente une saillie qui est réalisée pour s'engager, dans l'agencement de couplage, derrière un retrait du moyen de connexion enfichable antagoniste (36).

4. Appareil de commande manuel de robot selon la revendication 2, dans lequel le moyen de connexion enfichable (35). présente un retrait qui est réalisé pour être, dans l'agencement de couplage, engagé par l'arrière par une saillie du moyen de connexion enfichable antagoniste (36).

5. Appareil de commande manuel de robot selon revendication 1, dans lequel le moyen de connexion enfichable (35), dans un agencement d'assemblage par rapport au moyen de connexion enfichable antagoniste (36), est réalisé pour s'amener dans un agencement de couplage avec le moyen de connexion enfichable (36) antagoniste par un mouvement translatoire et/ou rotatif de l'appareil de commande manuel de robot (15) par rapport à l'appareil (26) à accoupler, de telle sorte que le moyen de connexion enfichable (35). est, dans cet agencement de couplage, relié par coopération de forces avec le moyen de connexion antagoniste enfichable (36).

6. Appareil de commande manuel de robot selon revendication 5, dans lequel moyen de connexion enfichable (35) présente un dispositif de serrage qui est réalisé pour serrer, dans l'agencement de couplage, le moyen de connexion enfichable (35) par coopération de forces contre le moyen de connexion enfichable antagoniste (36)

7. Appareil de commande manuel de robot selon la revendication 1, dans lequel le moyen de connexion enfichable (35), dans un agencement d'assemblage par rapport au moyen de connexion enfichable antagoniste (36), est réalisé pour s'amener dans un agencement de couplage avec le moyen de connexion enfichable (36) antagoniste par un mouvement translatoire et/ou rotatif de l'appareil de commande manuel de robot (15), par rapport à l'appareil (26) à accoupler, de telle sorte que le moyen de connexion enfichable (35). est, dans cet agencement de couplage, relié par force magnétique avec le moyen de connexion antagoniste enfichable (36).

8. Appareil de commande manuel de robot selon l'une des revendications 1 à 7, dans lequel lesdits au moins deux éléments de retenue (25) présentent au moins deux moyens de connexion enfichables (35) qui sont agencés sur l'appareil de commande manuel de robot (15), en particulier sur le boîtier (16), en étant dirigés dans au moins deux orientations différentes.

9. Appareil de commande manuel de robot selon l'une des revendications 1 à 8, dans lequel le dispositif de commande de base de sécurité (17) présente au moins un moyen de déclenchement d'arrêt d'urgence (18), au moins un dispositif d'assentiment (19), au moins un moyen de sélection du mode de fonctionnement (20) et/ou au moins un moyen d'affichage (21), en particulier un écran électronique.

10. Appareil de commande manuel de robot selon l'une des revendications 1 à 9, dans lequel le boîtier (16) présente une paroi de recouvrement (16b), une paroi de fond (16c) et une paroi enveloppante (16d) qui relie la paroi de recouvrement (16b) avec la paroi de fond (16c) et qui forme le tronçon de préhension (16a) en forme de poignée.

11. Appareil de commande manuel de robot selon la revendication 10, dans lequel la paroi d'enveloppe (16d) est réalisée avec un rétrécissement dans un tronçon médian (24) pour former un boîtier (16) en forme d'haltère par rapport à un tronçon supérieur (22) de la paroi d'enveloppe (16d) qui est adjacent à la paroi de recouvrement (16b) et à un tronçon inférieur (23) de la paroi d'enveloppe (16d) qui est adjacent à la paroi de fond (16c), le boîtier (16) présentant dans ce tronçon médian (24) rétréci de la paroi d'enveloppe (16d) le tronçon de préhension (16a) en forme de poignée.

12. Appareil de commande manuel de robot selon la revendication 11, dans lequel ledit au moins support (25), en particulier ledit au moyen un moyen de connexion enfichable (35) est agencé sur le tronçon supérieur (22) de la paroi d'enveloppe (16d) et/ou sur le tronçon inférieur (23) de la paroi d'enveloppe (16d).

13. Appareil, en particulier bras de robot (29), socle de commande (28), plateforme de robot (32) roulante, module d'accessoires (31) et/ou dispositif terminal (27a) mobile, présentant au moins un moyen de connexion enfichable antagoniste (36) qui est réalisé pour coopérer avec un moyen de connexion enfichable (35) de l'appareil de commande manuel de robot (15) selon l'une des revendications 1 à 12, dans un agencement de couplage de l'appareil (26), en particulier du bras de robot (29), du socle de commande (28), de la plateforme de robot (32) roulante, du module d'accessoires (31) et/ou du dispositif terminal (27a) mobile qui est enfiché sur un appareil de commande manuel de robot (15) selon l'une des revendications 1 à 12, **caractérisé par** au moins deux moyens de connexion enfichables antagonistes (36) qui sont agencés sur l'appareil (26), en particulier sur le bras de robot (29), sur le socle de commande (28), sur la plateforme de robot (32) roulante, sur le module d'accessoires (31) et/ou sur le dispositif terminal (27a) mobile, en étant dirigés dans au moins deux orientations différentes.

14. Système présentant un appareil de commande manuel de robot (15) selon l'une des revendications 1 à 12 et au moins deux appareils (26) parmi le groupe d'au moins un bras de robot (29), d'au moins une plateforme de robot (32) roulante, d'au moins un module d'accessoires (31) et d'au moins un dispositif terminal (27a) mobile selon la revendication 13, au moins un moyen de connexion enfichable (35) de l'appareil de commande manuel de robot (15) étant réalisé pour accoupler sélectivement l'appareil de commande manuel de robot (15) audit un appareil (26) ou audit au moins un autre appareil (26).
